# EUROPÄISCHE PATENTSCHRIFT

(11) **EP 3 976 401 B1**
(45) Veröffentlichungstag und Bekanntmachung des Hinweises auf die Patenterteilung: **04.10.2023**
(21) Anmeldenummer: 20727933.2
(22) Anmeldetag: 08.05.2020
(51) Int. Cl.: B60G 13/00, B23P 19/10, B62D 65/02, F16F 9/54, B62D 25/08, B62D 65/12

(54) **FAHRZEUG SOWIE VERFAHREN ZUM ZUSAMMENBAU DES FAHRZEUGS**
VEHICLE AND METHOD FOR ASSEMBLING THE VEHICLE
VÉHICULE ET MÉTHODE POUR ASSEMBLER LE VÉHICULE

(30) Priorität: 29.05.2019 DE 102019207872
(43) Veröffentlichungstag der Anmeldung: 06.04.2022
(73) Patentinhaber: Volkswagen AG, 38440 Wolfsburg (DE)
(72) Erfinder: SCHILLING, Thomas, 38524 Sassenburg (DE); KRAUTH, Werner, 38442 Wolfsburg (DE); WALLMANN, Nicole, 29379 Knesebeck (DE)
(86) Internationale Anmeldenummer: PCT/EP2020/062934
(87) Internationale Veröffentlichungsnummer: WO 2020/239399

(56) Entgegenhaltungen:
- DE-A1- 10 255 296
- DE-A1-102010 006 279
- FR-A1- 3 056 130

## Beschreibung

Die Erfindung betrifft ein Fahrzeug nach dem Oberbegriff des Anspruches 1 sowie ein Verfahren zum Zusammenbau des Fahrzeuges gemäß dem Anspruch 9.

Der Stoßdämpfer ist Bestandteil eines Fahrzeug-Fahrwerks, das im fahrzeugbauenden Werk in einem Zusammenbau-Prozessschritt von fahrzeugunten an die Fahrzeugkarosserie angebunden wird. Im Zusammenbau-Prozessschritt wird der Stoßdämpfer mittels einer Positionierhilfe in seine Einbauposition vorpositioniert. Anschließend wird der in seiner Einbauposition vorpositionierte Stoßdämpfer über sein Dämpferlager mit einer karosserieseitigen Dämpfer-Aufnahme verschraubt.

In einer Lageranordnung ist die Dämpfer-Aufnahme Bestandteil eines das Radhaus begrenzenden Radhaus-Blechteils und mit dem Dämpferlager des Stoßdämpfers in Schraubverbindung. Bei der Schraubverbindung ist ein Schraubbolzen durch ein Dämpferlager-Schraubloch und durch ein Schraubloch der Dämpfer-Aufnahme geführt und mit seiner Bolzenspitze mit einem Innengewinde eines Verstärkungselementes verschraubt. Das Verstärkungselement kann eine Gewindeplatte sein, die auf der vom Radhaus abgewandten Seite der Dämpfer-Aufnahme angeordnet ist.

Beim Zusammenbau-Prozessschritt sind mit dem Erreichen der Einbauposition das Dämpferlager-Schraubloch, das Schraubloch der Dämpfer-Aufnahme und das Innengewinde der Gewindeplatte in Schraubrichtung in Flucht zueinander angeordnet. Aufgrund von Bauteil- und/oder Fertigungstoleranzen besteht die Problematik, dass in der Einbauposition die Schraublöcher sowie das Innengewinde der Gewindeplatte zueinander geringfügig außer Flucht sind, wodurch eine störkonturfreie Verschraubung des Dämpferlagers beeinträchtigt sein kann.

Aus der DE 10 2010 006 279 A1 ist Anordnung an einem Fahrzeugaufbau zur Befestigung eines Schwingungsdämpfers oder eines Federbeins bekannt. Die Anordnung weist ein Anschlussteil auf, welches zum einen mit dem Schwingungsdämpfer oder Federbein verbunden und zum anderen mittels mechanischer Befestigungselemente am Fahrzeugaufbau festgelegt oder festlegbar ist. Der Fahrzeugaufbau weist einen Befestigungsabschnitt auf, an welchem das Anschlussteil des Schwingungsdämpfers oder des Federbeins befestigt oder befestigbar ist.

Der Befestigungsabschnitt weist zumindest ein einstückig mit demselben ausgebildetes und zum Anschlussteil hin gerichtetes Führungselement auf. Zur Erleichterung der Montage des Schwingungsdämpfers oder Federbeins ist an das Führungselement das Anschlussteil mit einer Außenrandkontur angesetzt. Aus der DE 102 55 296 A1 ist eine Vorrichtung zur Befestigung eines Bauteils bekannt. Aus der FR 3 056 130 A1 ist ein Werkzeug zur Befestigung eines Stoßdämpfers an einer Fahrzeugkarosserie in verschiedenen Höhen bekannt.

Aus der DE 10 2010 014 508 A1 ist ein Verfahren zum Ausrichten zweier Bauteile zueinander bekannt. Aus der DE 102 55 296 B4 ist eine Vorrichtung zur Befestigung eines Bauteils bekannt.

Die Aufgabe der Erfindung besteht darin, ein Fahrzeug sowie ein Verfahren zum Zusammenbau des Fahrzeuges bereitzustellen, mittels dem im Vergleich zum Stand der Technik eine prozesssichere, störkonturfreie Verschraubung des Dämpferlagers an der Fahrzeugkarosserie ermöglicht ist.

Die Aufgabe ist durch die Merkmale des Anspruches 1 oder 9 gelöst. Bevorzugte Weiterbildungen der Erfindung sind in den Unteransprüchen offenbart.

Erfindungsgemäß ist die Positionierhilfe, mittels der das Dämpferlager im Zusammenbau-Prozessschritt in der Einbauposition vorpositioniert wird, ein materialeinheitlicher und/oder einstückiger Bestandteil des Verstärkungselementes (das heißt der Gewindeplatte). Auf diese Weise ist eine Relativlage zwischen der Positionierhilfe und dem Innengewinde des Verstärkungselementes festgelegt, und zwar unabhängig von Bauteil- und/oder Fertigungstoleranzen in der karosserieseitigen Dämpfer-Aufnahme und/oder im Radhaus-Blechteil. Dadurch wird in konstruktiv einfacher Weise eine Toleranzkette beim Zusammenbau-Prozessschritt reduziert, so dass im Vergleich zum Stand der Technik weitgehend unabhängig von Fertigungs- und/oder Bauteiltoleranzen eine störkonturfreie Verschraubung des Dämpferlagers ermöglicht ist.

In einer technischen Umsetzung kann das Radhaus-Blechteil einen schalenförmigen Blech-Grundkörper aufweisen, der das Radhaus begrenzt. Von dem schalenförmigen Blech-Grundkörper kann zumindest eine die Dämpfer-Aufnahme bildende Blechverprägung in das Radhaus abragen. Die Dämpfer-Aufnahme kann eine nach fahrzeugunten weisende Anschraubwand mit einer Fügefläche aufweisen. Diese ist in der Zusammenbaulage in flächigem Kontakt mit einem Befestigungsflansch des Dämpferlagers. Sowohl in der Anschraubwand der Dämpfer-Aufnahme als auch in dem Dämpferlager-Befestigungsflansch können die Schraublöcher ausgebildet sein, durch die der Schraubbolzen geführt ist.

In einer technischen Realisierung kann das Verstärkungselement eine Gewindeplatte sein, die einen Gewinde-Durchzug mit einem Innengewinde aufweist. Alternativ dazu kann an der Gewindeplatte auch eine Schweißmutter angebunden sein, in die der Schraubbolzen verschraubbar ist. Die Gewindeplatte kann in loser Anlage mit der vom Dämpferlager abgewandten Seite der Anschraubwand der Dämpfer-Aufnahme sein. Bei festgespannter Schraubverbindung können daher der Dämpferlager-Befestigungsflansch und die Anschraubwand der Dämpfer-Aufnahme zwischen der Gewindeplatte und einem Bolzenkopf des Schraubbolzens verspannt sein.

In einer bevorzugten Ausführungsvariante kann das Verstärkungselement einen Gewindeplatten-Grundkörper aufweisen, von dem an einer Biegekante eine Blechlasche abgewinkelt ist, die als Positionierhilfe wirkt. Die Blechlasche der Gewindeplatte kann durch eine Durchlassöffnung der Dämpfer-Aufnahme geführt sein und in das Radhaus einragen.

Die Anschraubwand der Dämpfer-Aufnahme kann an einem Blechübergang bzw. einer Übergangskante nach fahrzeugunten in den schalenförmigen Blechgrundkörper übergehen. Bevorzugt ist es, wenn in der Fahrzeugquerrichtung der Befestigungsflansch des Lagergehäuses zwischen der Positionier-Blechlasche und der oben definierten Übergangskante angeordnet ist.

In einer konkreten Ausführungsvariante werden in der Dämpferaufnahme zwei Bereiche (nachfolgend als Blechverprägungen bezeichnet) für die Gewindeplatten bereitgestellt. Die Blechverprägungen der Dämpferaufnahme können in der Fahrzeuglängsrichtung um einen Längsfreigang voneinander beabstandet sein. Jede Blechverprägung der Dämpfer-Aufnahme kann in Schraubverbindung mit jeweils einem Befestigungsflansch des Dämpferlagers sein, wobei eine Lagergehäuse-Oberseite des Dämpferlagers berührungsfrei in den Längsfreigang zwischen den beiden Blechverprägungen der Dämpfer-Aufnahme einragen kann.

Das Lagergehäuse des Dämpferlagers kann eine zu den Positionier-Blechlaschen korrespondierende Gegenkontur aufweisen. Vor diesem Hintergrund kann das Lagergehäuse ein Längsanschlagelement aufweisen, das bei einer lagerichtigen Stoßdämpfer-Positionierung in Längsflucht zwischen den beiden Positionier-Blechlaschen der Gewindeplatten angeordnet ist. In diesem Fall ist das Längsanschlagelement des Lagergehäuses, in der Fahrzeuglängsrichtung betrachtet, zwischen den einander zugewandten Beschnittkanten der Positionier-Blechlaschen angeordnet.

Beim Zusammenbau-Prozessschritt wird zunächst der noch nicht an der Fahrzeugkarosserie montierte Stoßdämpfer von fahrzeugunten in das Radhaus bis in seine Einbauposition geführt. Dabei kann das Gehäuse-Oberteil des Dämpferlagers entlang des schalenförmigen Blech-Grundkörpers nach fahrzeugoben gleiten. Mit Erreichen der Einbauposition sind die beiden Befestigungsflansche des Dämpferlagers in Anschlag mit den beiden Positionier-Blechlaschen der Gewindeplatten gebracht sowie in flächiger Anlage mit den beiden Anschraubwänden der Blechverprägungen der Dämpfer-Aufnahme. Zudem ist das Längsanschlagelement des Dämpferlagers in Längsflucht zwischen den beiden Positionier-Blechlaschen der Gewindeplatten gebracht. Von daher kann in einem nachfolgenden Prozessschritt eine störkonturfreie Verschraubung des Dämpferlagers an der Dämpfer-Aufnahme erfolgen.

Nachfolgend ist ein Ausführungsbeispiel der Erfindung anhand der beigefügten Figuren beschrieben. Es zeigen:
- Fig. 1: in einer schematischen Schnittdarstellung eine Lageranordnung mit einem im Fahrzeug-Radhaus angebundenen Stoßdämpfer;
- Fig. 2 bis 4: jeweils weitere Ansichten, anhand derer die Lageranordnung veranschaulicht ist; und
- Fig. 5 und 6: jeweils Ansichten entsprechend der Fig. 1, anhand derer eine Montagefolge bei der Stoßdämpfer-Montage im Fahrzeugradhaus veranschaulicht ist.

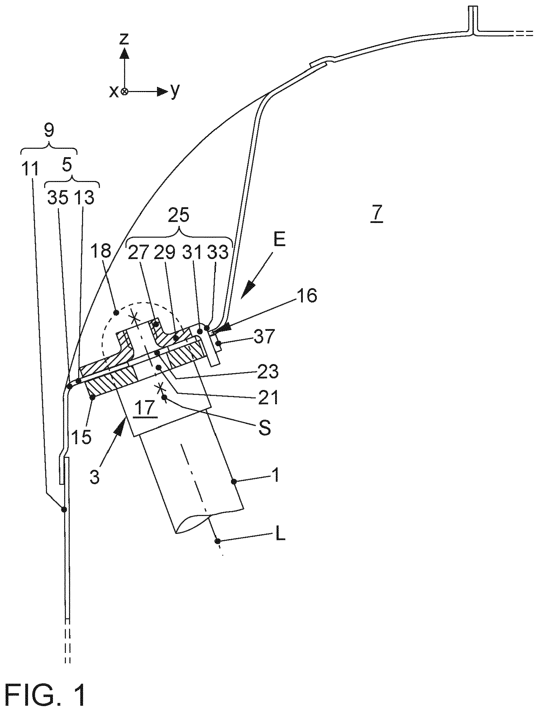

In der Fig. 1 ist ein Zusammenbauzustand gezeigt, bei dem ein Stoßdämpfer 1 über sein Dämpferlager 3 an eine Dämpfer-Aufnahme 5 in einem heckseitigen Radhaus 7 eines Fahrzeugs verbaut ist. Das Radhaus 7 ist von einem Radhaus-Blechteil 9 begrenzt. Das Radhaus-Blechteil 9 weist einen schalenförmigen Blech-Grundkörper 11 auf, von dem insgesamt zwei Blechverprägungen der Dämpfer-Aufnahme 5 in das Radhaus 7 hinein abragen. In der Fig. 1 ist lediglich eine Blechverprägung der Dämpfer-Aufnahme 5 gezeigt. Jede der Blechverprägungen ist mit einer nach fahrzeugunten weisenden Anschraubwand 13 realisiert, an der jeweils ein Befestigungsflansch 15 eines Dämpferlagers 17 des Stoßdämpfers 1 in Schraubverbindung S angebunden ist.

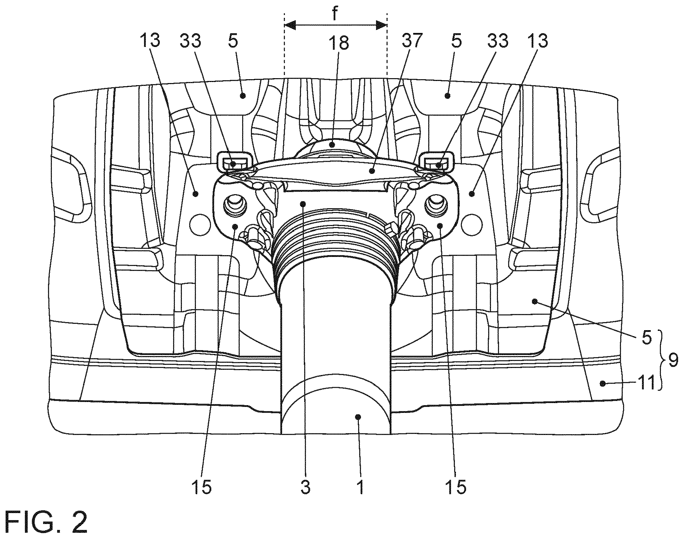

Das Dämpferlager 3 des Stoßdämpfers 1 weist in der Fig. 1 ein Lagergehäuse 17 auf, das mit Bezug auf eine Stoßdämpfer-Längsachse L die beiden diametral gegenüber angeordneten, radial nach außen abragenden Befestigungsflansche 15 (siehe Figur 2) aufweist. Jeder der Befestigungsflansche 15 ist in Schraubverbindung S mit der Anschraubwand 13 der jeweiligen Dämpfer-Aufnahme 5.

Die Schraubverbindung S weist einen nicht dargestellten Schraubbolzen auf, der von fahrzeugunten durch ein Schraubloch 21 des jeweiligen Befestigungsflansches 21 des Dämpferlagers 3 und durch ein Schraubloch 23 in der Anschraubwand 13 der jeweiligen Blechverprägung der Dämpfer-Aufnahme 5 geführt ist. Der Schraubbolzen ist mit seiner Bolzenspitze mit einer Gewindeplatte 25 verschraubt. Diese liegt in der Fig. 1 lose auf der von dem Radhaus 7 abgewandten Seite der Anschraubwand 13 auf. Die Gewindeplatte 25 weist in der Fig. 1 einen Gewindedurchzug 27 mit Innengewinde auf, das in Gewindeeingriff mit dem Schraubbolzen ist. Gemäß der Fig. 1 weist die Gewindeplatte 25 einen flächigen Platten-Grundkörper 29 auf, in dem der Gewinde-Durchzug 27 ausgebildet ist. Von dem Platten-Grundkörper 29 ist an einer Biegekante 31 eine Positionier-Blechlasche 33 abgewinkelt. Diese ist durch eine Durchlassöffnung 16 der Anschraubwand 13 geführt und ragt in das Radhaus 7 ein.

Die Anschraubwand 13 der Dämpfer-Aufnahme 5 geht in der Fig. 1 in der Fahrzeugquerrichtung y nach fahrzeuginnen an einem Blechübergang 35 in den schalenförmigen Blech-Grundkörper 11 über. In der Fig. 1 ist der Befestigungsflansch 15 des Dämpferlagers 3, in der Fahrzeugquerrichtung y betrachtet, zwischen der Positionier-Blechlasche 33 und dem Blechübergang 35 angeordnet.

Wie aus der Fig. 2 weiter hervorgeht, sind die beiden Blechverprägungen der Dämpfer-Aufnahme 5 in der Fahrzeuglängsrichtung x über einen Längsfreigang f voneinander beabstandet. In den Längsfreigang f ragt das zylindrische Lagergehäuse 17 mit seiner Gehäuse-Oberseite 18 berührungsfrei ein.

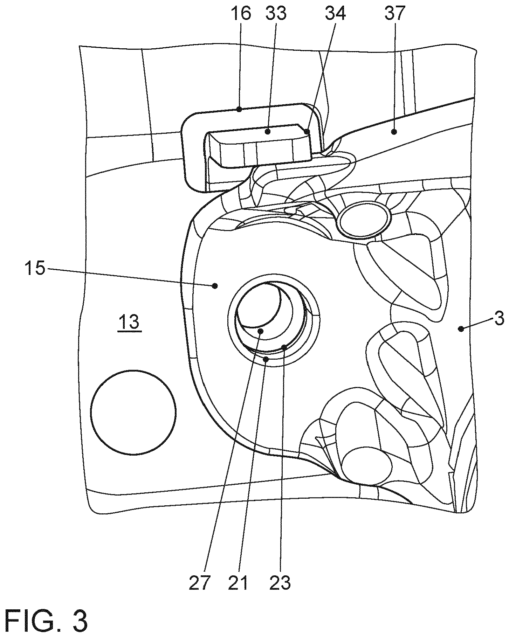

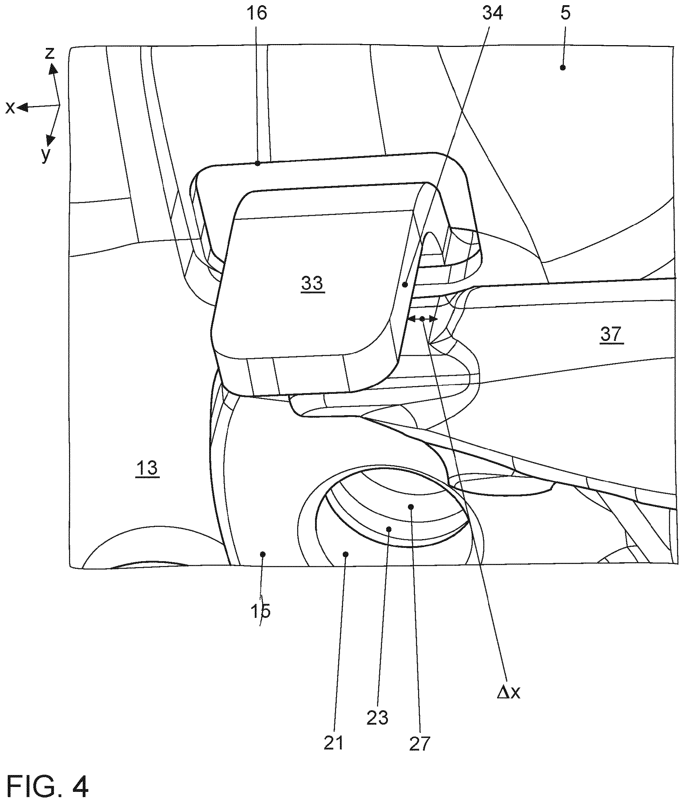

Das Lagergehäuse 17 weist in den Fig. 1 bis 4 zudem ein Längsanschlagelement 37 auf, das in der Fahrzeuglängsrichtung x betrachtet in Längsflucht zwischen den beiden Positionier-Blechlaschen 33 angeordnet ist und über ein geringfügiges Bewegungsspiel Δx (Figur 4) von einer jeweils zugewandten Beschnittkante 34 der Positionier-Blechlasche 33 beabstandet ist.

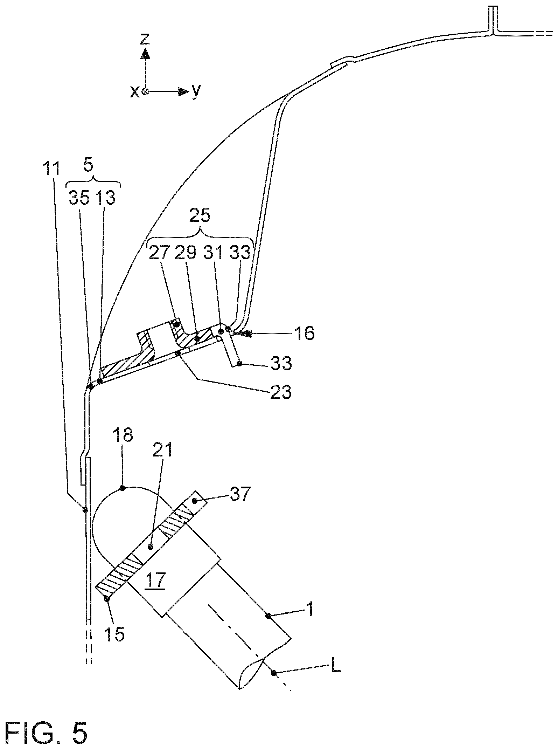

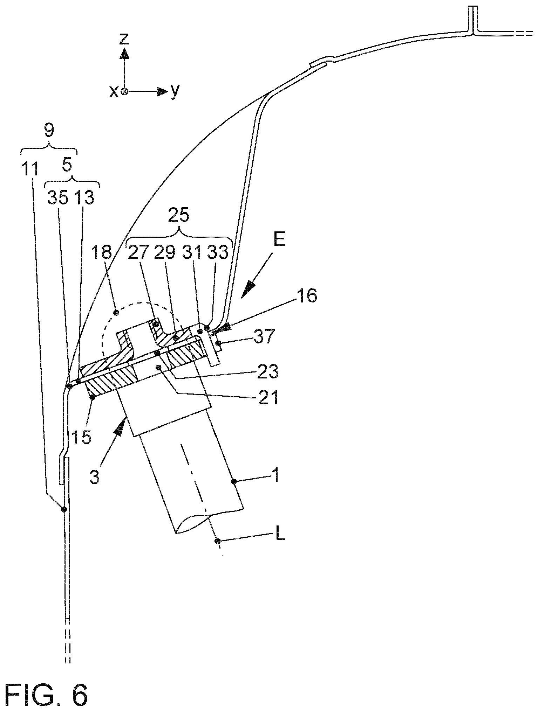

Nachfolgend wird anhand der Fig. 5 und 6 eine Montageabfolge zur Anbindung des Stoßdämpfers 1 am Radhaus-Blechteil 9 des Fahrzeugs beschrieben: Demzufolge wird der Stoßdämpfer 1 in einer Fügerichtung F (Figur 5) von fahrzeugunten in das Radhaus 7 eingeführt, und zwar bis Erreichen der Einbauposition E (Fig. 6) geführt, in der die beiden Befestigungsflansche 15 des Lagergehäuses 17 gegen die beiden Positionier-Blechlaschen 33 anschlagen. Während der Einführbewegung in der Fügerichtung F (Figur 5) gleitet das Gehäuse-Oberteil 18 entlang des schalenförmigen Blech-Grundkörpers 11 nach fahrzeugoben bis in die Einbauposition E. In der Einbauposition E ist das Gehäuse-Oberteil 18 des Dämpferlagers 3 berührungsfrei zwischen den beiden Blechverprägungen der Dämpfer-Aufnahme 5 positioniert, während der Befestigungsflansche 15 in flächiger Anlage mit der jeweiligen Anschraubwand 13 der Dämpfer-Aufnahme 5 gebracht sind. Zudem befindet sich in der Einbauposition E das Längsanschlagelement 37 in Längsflucht zwischen den beiden Positionier-Blechlaschen 33.

Die Einbauposition E ist so ausgelegt, dass das Schraubloch 21 des jeweiligen Befestigungsflansches 15, das Schraubloch 23 der Anschraubwand 13 der Dämpfer-Aufnahme 5 sowie der Gewinde-Durchzug 27 der Gewindeplatte 25 in Schraubrichtung in Längsflucht ausgerichtet sind. Von daher kann in einem nachfolgenden Prozessschritt eine störkonturfreie Verschraubung des Schraubbolzens erfolgen, um das Lagergehäuse 3 des Stoßdämpfers 1 an den beiden Blechverprägungen der Dämpfer-Aufnahme 5 des Radhauses 7 anzubinden.

### Bezugszeichenliste

- 1: Stoßdämpfer
- 3: Lagergehäuse
- 5: Dämpfer-Aufnahme
- 7: Radhaus
- 9: Radhaus-Blechteil
- 11: Blechteil-Grundkörper
- 13: Anschraubwand
- 15: Befestigungsflansch
- 16: Durchlassöffnung
- 17: Dämpferlager
- 18: Lagergehäuse-Oberseite
- 19: Schraubbolzen
- 21: Befestigungsflansch-Schraubloch
- 23: Anschraubwand-Schraubloch
- 25: Gewindeplatte
- 27: Gewinde-Durchzug mit Innengewinde
- 29: Gewindeplatten-Grundkörper
- 31: Biegekante
- 33: Positionier-Blechlasche
- 34: Beschnittkanten der Positionier-Blechlaschen
- 35: Blechübergang
- 37: Längsanschlagelement
- f: Freigang
- Δx: Längsspiel
- E: Einbauposition
- F: Fügerichtung
- S: Schraubverbindung

## Patentansprüche

1. Fahrzeug, das ein Radhaus (7), einen Stoßdämpfer (1), ein Dämpferlager (17) und eine Lageranordnung aufweist,
wobei bei der Lageranordnung in einem das Radhaus (7) begrenzenden Radhaus-Blechteil (9) eine Dämpfer-Aufnahme (5) ausgebildet ist, die mit dem Dämpferlager (17) des Stoßdämpfers (1) in Schraubverbindung (S) ist, bei der ein Schraubbolzen durch ein Dämpferlager-Schraubloch (21) und durch ein Schraubloch (23) der Dämpfer-Aufnahme (5) geführt ist und mit seiner Bolzenspitze mit einem Innengewinde eines Verstärkungselements (25) verschraubt ist, das auf der vom Radhaus (7) abgewandten Seite der Dämpfer-Aufnahme (5) angeordnet ist, wobei der Dämpfer-Aufnahme (5) eine Positionierhilfe (33) zugeordnet ist, mittels der das Dämpferlager (17) des Stoßdämpfers (1) in einem Zusammenbauvorgang bis in eine Einbauposition (E) vorpositionierbar ist, in der das Schraubloch (21) des Dämpferlagers (17), das Schraubloch (23) der Dämpfer-Aufnahme (5) und das Verstärkungselement-Innengewinde in einer Schraubrichtung in Flucht zueinander ausgerichtet sind, wobei die Positionierhilfe (33) ein materialeinheitlicher und/oder einstückiger Bestandteil des Verstärkungselements (25) ist, so dass eine Relativlage zwischen der Positionierhilfe (33) und dem Verstärkungselement-Innengewinde festgelegt ist, und zwar unabhängig von Bauteil- und/oder Fertigungstoleranzen in der Dämpfer-Aufnahme (5) und/oder im Radhaus-Blechteil (9).

2. Fahrzeug nach Anspruch 1, **dadurch gekennzeichnet, dass** das Radhaus-Blechteil (9) einen schalenförmigen Blech-Grundkörper (11) aufweist, von dem zumindest eine, die Dämpfer-Aufnahme (5) bildende Blechverprägung in das Radhaus (7) abragt, und/oder dass insbesondere die Dämpfer-Aufnahme (5) zumindest eine nach fahrzeugunten weisende Anschraubwand (13) mit einer Fügefläche aufweist, die in Kontakt mit einem Befestigungsflansch (15) des Dämpferlagers (17) ist, und/oder dass in der Anschraubwand (13) der Dämpfer-Aufnahme (5) und in dem Dämpferlager-Befestigungsflansch (15) die Schraublöcher (21, 23) ausgebildet sind, durch die der Schraubbolzen geführt ist.

3. Fahrzeug nach Anspruch 1, **dadurch gekennzeichnet, dass** das Verstärkungselement (25) eine Gewindeplatte ist, und/oder dass das Verstärkungselement (25) in loser Anlage mit der vom Dämpferlager (17) abgewandten Seite der Anschraubwand (13) der Dämpfer-Aufnahme (5) ist, und dass insbesondere bei festgespannter Schraubverbindung (S) der Dämpferlager-Befestigungsflansch (15) und die Anschraubwand (13) der Dämpfer-Aufnahme (5) zwischen dem Verstärkungselement (25) und einem Bolzenkopf des Schraubbolzens verspannt ist.

4. Fahrzeug nach Anspruch 3, **dadurch gekennzeichnet, dass** in der Dämpfer-Aufnahme (5), insbesondere in der Anschraubwand (13) der Dämpfer-Aufnahme (5), eine Durchlassöffnung (16) ausgebildet ist, durch die die Positionierhilfe (33) geführt ist und in das Radhaus (7) einragt, und/oder dass die Positionierhilfe (33) die Dämpfer-Aufnahme (5) mit einer Bauteilhöhe überragt, und dass insbesondere die Positionierhilfe (33) eine am Verstärkungselement (25) angeformte Positionier-Blechlasche ist, die insbesondere an einer in der Fahrzeuglängsrichtung (x) ausgerichteten Biegekante (31) von einem Gewindeplatten-Grundkörper (29) abgewinkelt ist.

5. Fahrzeug nach einem der vorhergehenden Ansprüche, **dadurch gekennzeichnet, dass** die Dämpfer-Aufnahme (5) zwei Blechverprägungen aufweist, die in der Fahrzeuglängsrichtung (x) betrachtet um einen Längsfreigang (f) voneinander beabstandet sind, und dass jede der Blechverprägungen der Dämpfer-Aufnahme (5) in Schraubverbindung (S) mit jeweils einem Befestigungsflansch (15) des Dämpferlagers (17) ist, und dass insbesondere eine Lagergehäuse-Oberseite (18) des Dämpferlagers (17) berührungsfrei in den Längsfreigang (f) zwischen den beiden Blechverprägungen der Dämpfer-Aufnahme (5) einragt.

6. Fahrzeug nach einem der vorhergehenden Ansprüche, **dadurch gekennzeichnet, dass** die Anschraubwand (13) der Dämpfer-Aufnahme (5) an einer Übergangskante (35) nach fahrzeugunten in den schalenförmigen Blech-Grundkörper (11) übergeht, und/oder dass in der Fahrzeugquerrichtung (y) betrachtet der Befestigungsflansch (15) des Lagergehäuses (3) zwischen der Positionierhilfe (33) und der Übergangskante (35) angeordnet ist.

7. Fahrzeug nach Anspruch 5 oder 6, **dadurch gekennzeichnet, dass** das Verstärkungselement (25) eine identisch zur Positionierhilfe (33) ausgebildete weitere Positionierhilfe aufweist, wobei das Lagergehäuse (3) des Stoßdämpfers (1) ein Längsanschlagelement (37) aufweist, das bei lagerichtiger Stoßdämpfer-Positionierung in Längsflucht zwischen den beiden Positionierhilfen (33) der Dämpfer-Aufnahme (5) angeordnet ist, insbesondere zwischen den einander zugewandten Beschnittkanten (34) der Positionier-Blechlaschen (33).

8. Fahrzeug nach Anspruch 7, **dadurch gekennzeichnet, dass** beim Zusammenbauvorgang der noch nicht an der Fahrzeugkarosserie montierte Stoßdämpfer (1) in einer Fügerichtung (F) von fahrzeugunten in das Radhaus (7) bis in die Einbauposition (E) geführt wird, und zwar mit dem entlang des schalenförmigen Blech-Grundkörpers (11) nach fahrzeugoben gleitenden Gehäuse-Oberteil (18) des Dämpferlagers (17) bis Erreichen der Einbauposition (E), in der die beiden Befestigungsflansche (15) in Anschlag mit den zwei Positionierhilfen (33) der Dämpfer-Aufnahme (5) gebracht sind sowie das Längsanschlagelement (37) des Dämpferlagers (17) in Längsflucht zwischen den beiden Positionierhilfen (33) der Dämpfer-Aufnahme (5) gebracht ist, so dass in der Einbauposition (E) eine störkonturfreie Verschraubung des Dämpferlagers (17) an der Dämpfer-Aufnahme (5) ermöglicht ist.

9. Verfahren zum Zusammenbau eines Fahrzeuges nach einem der vorhergehenden Ansprüche.

## Claims

1. Vehicle comprising a wheel housing (7), a shock absorber (1), a damper bearing (17) and a bearing arrangement,
wherein a damper receptacle (5) is formed in the bearing arrangement in a wheel housing sheet-metal part (9) delimiting the wheel housing (7), which damper receptacle is connected in a screw connection (S) to the damper bearing (17) of the shock absorber (1), in which screw connection a screw bolt is guided through a damper bearing screw hole (21) and through a screw hole (23) of the damper receptacle (5) and is screwed by its bolt tip to an internal thread of a reinforcing element (25), which is arranged on the side of the damper receptacle (5) facing away from the wheel housing (7), wherein a positioning aid (33) is assigned to the damper receptacle (5), by means of which positioning aid the damper bearing (17) of the shock absorber (1) can be prepositioned in an assembly process until it is in an installation position (E), in which installation position the screw hole (21) of the damper bearing (17), the screw hole (23) of the damper receptacle (5), and the reinforcing element internal thread are mutually aligned in a screwing direction, wherein the positioning aid (33) is a materially uniform and/or integral component of the reinforcing element (25), and therefore a relative position between the positioning aid (33) and the reinforcing element inner thread is fixed, specifically irrespective of component and/or manufacturing tolerances in the damper receptacle (5) and/or in the wheel housing sheet-metal part (9).

2. Vehicle according to claim 1, **characterized in that** the wheel housing sheet-metal part (9) has a shell-shaped sheet-metal main body (11), from which at least one sheet-metal stamped region, which forms the damper receptacle (5), projects into the wheel housing (7), and/or **in that**, in particular, the damper receptacle (5) has at least one screw-on wall (13), which points downward toward the underside of the car and has a joining surface which is in contact with a fastening flange (15) of the damper bearing (17), and/or **in that** the screw holes (21, 23) are formed in the screw-on wall (13) of the damper receptacle (5) and in the damper bearing fastening flange (15), through which screw holes the threaded bolt is guided.

3. Vehicle according to claim 1, **characterized in that** the reinforcing element (25) is a threaded plate, and/or **in that** the reinforcing element (25) is in loose contact with the side of the screw-on wall (13) of the damper receptacle (5) facing away from the damper bearing (17), and **in that**, in particular when the screw connection (S) is tightened, the damper bearing fastening flange (15) and the screw-on wall (13) of the damper receptacle (5) are clamped between the reinforcing element (25) and a bolt head of the screw bolt.

4. Vehicle according to claim 3, **characterized in that** in the damper receptacle (5), in particular in the screw-on wall (13) of the damper receptacle (5), a passage opening (16) is formed through which the positioning aid (33) is guided and projects into the wheel housing (7), and/or **in that** the positioning aid (33) projects beyond the damper receptacle (5) by a component height, and **in that**, in particular, the positioning aid (33) is a positioning sheet-metal tab molded on the reinforcing element (25), which positioning sheet-metal tab is angled in particular on a bent edge (31), which is oriented in the vehicle longitudinal direction (x), by a threaded plate main body (29).

5. Vehicle according to any of the preceding claims, **characterized in that** the damper receptacle (5) has two sheet-metal stamped regions which are spaced apart from one another by a longitudinal clearance (f), viewed in the vehicle longitudinal direction (x), and **in that** each of the sheet-metal stamped regions of the damper receptacle (5) is in a screw connection (S) with a fastening flange (15) of the damper bearing (17) in each case, and **in that**, in particular, a bearing housing upper side (18) of the damper bearing (17) projects contactlessly into the longitudinal clearance (f) between the two sheet-metal stamped regions of the damper receptacle (5).

6. Vehicle according to any of the preceding claims, **characterized in that** the screw-on wall (13) of the damper receptacle (5) transitions, toward the vehicle underside, into the shell-shaped sheet-metal main body (11) at a transition edge (35), and/or **in that**, viewed in the vehicle transverse direction (y), the fastening flange (15) of the bearing housing (3) is arranged between the positioning aid (33) and the transition edge (35).

7. Vehicle according to claim 5 or 6, **characterized in that** the reinforcing element (25) has a further positioning aid which is identical to the positioning aid (33), the bearing housing (3) of the shock absorber (1) having a longitudinal stop element (37) which, in the case of positionally correct shock absorber positioning, is arranged in longitudinal alignment between the two positioning aids (33) of the damper receptacle (5), in particular between the facing trimmed edges (34) of the positioning tabs (33).

8. Vehicle according to claim 7, **characterized in that** during the assembly process, the shock absorber (1), which is not yet mounted on the vehicle body, is guided in a joining direction (F) from the vehicle underside into the wheel housing (7) until it is in the installation position (E), specifically by the housing upper part (18) of the damper bearing (17), which slides along the shell-shaped sheet-metal main body (11) toward the vehicle upper side until it reaches the installation position (E) in which the two fastening flanges (15) are brought into abutment with the two positioning aids (33) of the damper receptacle (5), and the longitudinal stop element (37) of the damper bearing (17) is brought into longitudinal alignment between the two positioning aids (33) of the damper receptacle (5), and therefore interference-contour-free screwing of the damper bearing (17) to the damper receptacle (5) is made possible in the installation position (E).

9. Method for assembling a vehicle according to any of the preceding claims.

## Revendications

1. Véhicule présentant un passage de roue (7), un amortisseur de chocs (1), un palier d'amortisseur (17) et un agencement de palier,
dans lequel, dans l'agencement de palier, un logement d'amortisseur (5) est réalisé dans une pièce en tôle de passage de roue (9) délimitant le passage de roue (7), lequel logement d'amortisseur est en liaison vissée (S) avec le palier d'amortisseur (17) de l'amortisseur de chocs (1), dans lequel un boulon fileté est guidé à travers un trou de vis (21) de palier d'amortisseur et à travers un trou de vis (23) du logement d'amortisseur (5) et est vissé avec sa pointe de boulon à un filetage intérieur d'un élément de renforcement (25) qui est disposé sur le côté du logement d'amortisseur (5) opposé au passage de roue (7), dans lequel un moyen auxiliaire de positionnement (33) est associé au logement d'amortisseur (5), au moyen duquel moyen auxiliaire de positionnement le palier d'amortisseur (17) de l'amortisseur de chocs (1) peut être prépositionné au cours d'un processus d'assemblage jusque dans une position de montage (E) dans laquelle le trou de vis (21) du palier d'amortisseur (17), le trou de vis (23) du logement d'amortisseur (5) et le filetage intérieur d'élément de renforcement sont alignés les uns par rapport aux autres dans un sens de vissage, dans lequel le moyen auxiliaire de positionnement (33) est un composant constitué d'une même matière que l'élément de renforcement (25) et/ou formé d'un seul tenant avec celui-ci, de sorte qu'une position relative entre le moyen auxiliaire de positionnement (33) et le filetage intérieur d'élément de renforcement est fixée, et ce indépendamment de tolérances de composant et/ou de fabrication dans le logement d'amortisseur (5) et/ou dans la pièce en tôle de passage de roue (9).

2. Véhicule selon la revendication 1, **caractérisé en ce que** la pièce en tôle de passage de roue (9) présente un corps de base en tôle (11) en forme de coque, à partir duquel au moins une empreinte de tôle formant le logement d'amortisseur (5) fait saillie dans le passage de roue (7), **et/ou en ce qu'en** particulier le logement d'amortisseur (5) présente au moins une paroi de vissage (13) orientée vers le bas du véhicule et comportant une surface de jonction qui est en contact avec une bride de fixation (15) du palier d'amortisseur (17), **et/ou en ce que** les trous de vis (21, 23) sont réalisés dans la paroi de vissage (13) du logement d'amortisseur (5) et dans la bride de fixation (15) du palier d'amortisseur, à travers lesquels trous de vis est guidé le boulon fileté.

3. Véhicule selon la revendication 1, **caractérisé en ce que** l'élément de renforcement (25) est une plaque filetée, **et/ou en ce que** l'élément de renforcement (25) est en appui lâche avec le côté de la paroi de vissage (13) du logement d'amortisseur (5) qui est opposé au palier d'amortisseur (17), **et en ce que,** en particulier lorsque la liaison vissée (S) est serrée rigidement, la bride de fixation (15) du palier d'amortisseur et la paroi de vissage (13) du logement d'amortisseur (5) sont serrées entre l'élément de renforcement (25) et une tête de boulon du boulon fileté.

4. Véhicule selon la revendication 3, **caractérisé en ce que,** dans le logement d'amortisseur (5), en particulier dans la paroi de vissage (13) du logement d'amortisseur (5), une ouverture de passage (16) est formée, à travers laquelle ouverture de passage le moyen auxiliaire de positionnement (33) est guidé et pénètre dans le passage de roue (7), **et/ou en ce que** le moyen auxiliaire de positionnement (33) dépasse le logement d'amortisseur (5) d'une hauteur de composant, **et en ce que,** en particulier, le moyen auxiliaire de positionnement (33) est une patte de positionnement en tôle formée au niveau de l'élément de renforcement (25), laquelle patte de positionnement en tôle est en particulier coudée à partir d'un corps de base de plaque filetée (29) au niveau d'une arête de pliage (31) orientée dans la direction longitudinale de véhicule (x).

5. Véhicule selon l'une des revendications précédentes,
**caractérisé en ce que** le logement d'amortisseur (5) présente deux gaufrages en tôle qui, vus dans la direction longitudinale de véhicule (x), sont espacés l'un de l'autre d'un dégagement longitudinal (f), **et en ce que** chacun des gaufrages en tôle du logement d'amortisseur (5) est en liaison vissée (S) avec respectivement une bride de fixation (15) du palier d'amortisseur (17), **et en ce que,** en particulier, un côté supérieur de boîtier de palier (18) du palier d'amortisseur (17) fait saillie sans contact dans le dégagement longitudinal (f) entre les deux gaufrages en tôle du logement d'amortisseur (5).

6. Véhicule selon l'une des revendications précédentes,
**caractérisé en ce que** la paroi de vissage (13) du logement d'amortisseur (5) se prolonge vers le bas du véhicule, au niveau d'une arête de transition (35), dans le corps de base en tôle (11) en forme de coque, **et/ou en ce que,** vue dans la direction transversale de véhicule (y), la bride de fixation (15) du boîtier de palier (3) est disposée entre le moyen auxiliaire de positionnement (33) et l'arête de transition (35).

7. Véhicule selon la revendication 5 ou 6, **caractérisé en ce que** l'élément de renforcement (25) présente un autre moyen auxiliaire de positionnement réalisé de manière identique au moyen auxiliaire de positionnement (33), dans lequel le boîtier de palier (3) de l'amortisseur de chocs (1) présente un élément de butée longitudinale (37) qui, lorsque l'amortisseur de chocs est positionné dans la bonne position, est disposé dans l'alignement longitudinal entre les deux moyens auxiliaires de positionnement (33) du logement d'amortisseur (5), en particulier entre les arêtes de coupe (34) orientées l'une vers l'autre des pattes de positionnement en tôle (33).

8. Véhicule selon la revendication 7, **caractérisé en ce que,** lors du processus d'assemblage, l'amortisseur de chocs (1) non encore monté sur la carrosserie de véhicule est guidé dans un sens d'assemblage (F) depuis le bas du véhicule dans le passage de roue (7) jusque dans la position de montage (E), et ce avec la partie supérieure de boîtier (18) du palier d'amortisseur (17) glissant le long du corps de base en tôle (11) en forme de coque vers le haut du véhicule jusqu'à atteindre la position de montage (E), dans laquelle position de montage les deux brides de fixation (15) sont amenées en butée avec les deux moyens auxiliaires de positionnement (33) du logement d'amortisseur (5) et l'élément de butée longitudinale (37) du palier d'amortisseur (17) est amené dans l'alignement longitudinal entre les deux moyens auxiliaires de positionnement (33) du logement d'amortisseur (5), de sorte que, dans la position de montage (E), un vissage sans contour parasite du palier d'amortisseur (17) sur le logement d'amortisseur (5) est possible.

9. Procédé permettant l'assemblage d'un véhicule selon l'une des revendications précédentes.
